**Europäisches Patentamt**

**European Patent Office**

**Office européen des brevets**

(11) Veröffentlichungsnummer: **0 170 755**
**B1**

(12) **EUROPÄISCHE PATENTSCHRIFT**

(45) Veröffentlichungstag der Patentschrift:
06.12.89

(21) Anmeldenummer: 84710023.7

(22) Anmeldetag: 07.06.84

(51) Int. Cl.⁴: **A 23 N 12/02**

(54) Waschvorrichtung für Zuckerrüben oder andere Feldfrüchte.

(43) Veröffentlichungstag der Anmeldung:
12.02.86 Patentblatt 86/7

(45) Bekanntmachung des Hinweises auf die Patenterteilung:
06.12.89 Patentblatt 89/49

(84) Benannte Vertragsstaaten:
**BE DE FR GB NL**

(56) Entgegenhaltungen:
DE-C-816 613
FR-A-635 210

(73) Patentinhaber: **Braunschweigische Maschinenbauanstalt AG, Am Alten Bahnhof 5, D-3300 Braunschweig (DE)**

(72) Erfinder: **Ludewig, Horst, Im Lindenfeld 34/36, D-3340 Wolfenbüttel (DE)**
Erfinder: **Hartmann, Heinrich, Dipl.- Ing., Birkenheg 43, D-3300 Braunschweig (DE)**

(74) Vertreter: **Döring, Rudolf, Dr.- Ing., Patentanwälte Dr.- Ing. R. Döring Dipl.- Phys. Dr. J. Fricke Jasperallee 1a, D-3300 Braunschweig (DE)**

EP 0 170 755 B1

**Beschreibung**

Die Erfindung betrifft eine Waschvorrichtung für Zuckerrüben oder andere Feldfrüchte mit einem Waschtrog und einer darin in Troglängsrichtung gehaltenen, rotierend antreibbaren Welle, an welcher sich radial erstreckende Rührknüppel befestigt sind, sowie mit einem Zu- und Ablauf für das Waschwasser und Einrichtungen zum Zuführen und Austragen der Feldfrüchte, wobei die antreibbare Welle während des Waschvorganges in wechselnder Drehrichtung um ihre Längsachse und in jeder Richtung jeweilig um 1/4 bis 1/3 einer vollen Umdrehung antreibbar ist und die Rührknüppel an der Welle nur etwa über 1/4 bis 1/3 des Wellenumfanges verteilt sowie zum Trogboden oder zu den Trogwänden weisend angeordnet sind.

Es sind Waschvorrichtungen der vorgenannten Art in der Form von Kartoffelwaschmaschinen bekannt (DE-C-816 613), die mit einer handbetätigbaren Rührwelle sowie daran gehaltenen Rührknüppeln ausgerüstet ist. Durch die Handbetätigung der Rührwelle sollen die Rührknüppel innerhalb des Troges in radialer Richtung um etwa 1/4 bis 1/3 einer vollen Umdrehung hin- und herbewegt werden. Von der Rührwelle erstreckt sich in entgegengesetzter Richtung zu den Rührknüppeln eine Auswurfeinrichtung, welche aus einer parallel zur Längsrichtung des Troges verlaufenden Tauch- und Förderklappe besteht. Nach Beendigung des Waschvorganges der in die Trommel eingefüllten Kartoffeln erfolgt deren Austrag dadurch, daß die handbetätigte Welle weiterverschwenkt wird, wobei die Rührknüppel aus dem Trog herausgeschwenkt werden und die Tauch und Förderklappe in den Trog eintaucht sowie bei einer weiteren Drehbewegung der Welle die vor ihr liegenden Kartoffeln längs der Trogwandung mitnimmt bis zum oberen Trogrand, von dem die Kartoffeln in eine Förderrutsche gelangen.

Die bekannte handbetätigbare Kartoffelwasch maschine ist nur für den chargenweisen Betrieb geeignet, wobei das Waschen und Austragen der Kartoffeln zeitlich getrennt nacheinander vorgenommen werden muß. Derartige Maschinen lassen sich auch nicht bei der beschriebenen Art des Austrages der gewaschenen Kartoffeln auf einen kontinuierlichen Betrieb umstellen.

Bei einer anderen bekannten Waschvorrichtung (FR-A-635 210), welche für den kontinuierlichen Betrieb geeignet ist, wird die auf ihrem Umfang und über ihre Länge mit radial versetzt angeordneten Rührknüppeln versehene Welle rotierend angetrieben. Die Drehzahl der Welle wird dabei so eingestellt, daß ein ständiges Reiben der Feldfrüchte aneinander erfolgt, jedoch eine Beschädigung durch die Berührung mit den Rührknüppeln vermieden wird. In der Regel erfolgt dabei eine Förderung der Feldfrüchte im Gegenstrom durch den Trog hindurch. Die an dem einen Ende des Troges der bekannten Waschvorrichtung vorgesehene Austrageinrichtung ist nach Art einer Schöpfeinrichtung ausgebildet, welche über die Antriebswelle betätigt wird, an der auch die Rührknüppel gehalten sind. Auf der Antriebswelle sind hierzu im Abstand gehaltene Kettenräder mit Endlosketten angeordnet, welche oberhalb des Troges um weitere Umlenkräder geführt sind. Zwischen den synchron umlaufenden Endlosketten sind Traversen vorgesehen mit daran gehaltenen hakenförmig im Abstand parallel zueinander verlaufenden Fingern, welche jeweils einen der Form einer Elevatorschaufel entsprechenden Austragrechen bilden.

Praktische Erfahrungen haben gezeigt, daß der Wascheffekt einen guten Füllungsgrad des Troges erfordert. Dieser wird bei Vorrichtungen mit rotierend angetriebener Welle und darauf gehaltenen Rührknüppeln im Bereich der Aufwärtsbewegung der Knüppel wesentlich größer als im Bereich der Abwärtsbewegung der Knüppel. Demgemäß tritt der Wascheffekt besonders in derjenigen Troghälfte auf, in welcher die Rührknüppel aufwärtsbewegt werden. Andererseits darf der Füllungsgrad der Trommel jedoch nicht zu hoch werden, da hierdurch der Wascheffekt wieder nachteilig beeinflußt wird und außerdem auch die Gefahr erhöhter Beschädigung der Rüben besteht. Es ist also bei den bekannten Waschvorrichtungen mit kontinuierlich angetriebener Welle nicht möglich, durch eine erhöhte Zufuhr der Rüben pro Zeiteinheit zu dem Waschtrog sowohl in derjenigen Troghälfte, in der die Knüppel abwärtsbewegt werden, als auch in der anderen Troghälfte einen günstigen Wascheffekt zu erreichen. Versuche mit Waschvorrichtungen, bei denen im Trog zwei parallel zueinander angeordnete Wellen mit diesen zugeordneten Rührknüppeln vorgesehen sind, haben zu keinen günstigeren Ergebnissen geführt.

Der Erfindung liegt die Aufgabe zugrunde, eine Waschvorrichtung der einleitend beschriebenen Art, bei der eine gleichmäßige Verteilung der Feldfrüchte über den Trogquerschnitt möglich ist, so auszubilden, daß ein kontinuierlicher Betrieb mit einer günstigen Nutzung des Trogvolumens die Wascheffektivität bzw. Verweilzeit der Feldfrüchte dem jeweiligen Verschmutzungsgrad angepaßt werden kann.

Zur Lösung der vorstehenden Aufgabe kennzeichnet sich die eingangs genannte Waschvorrichtung erfindungsgemäß durch die im Anspruch 1 genannten Merkmale.

Durch die neue Ausbildung kann ein über den Trogquerschnitt gleichmäßiger Füllungsgrad so eingestellt und verändert werden, daß ein günstiger Wascheffekt eintritt. Durch den über den Trogquerschnitt gleichmäßigen Füllungsgrad wird gegenüber den bekannten Waschvorrichtungen mit umlaufend angetriebenen Wellen ein wesentlich höherer Durchsatz der Feldfrüchte pro Zeiteinheit bei mindestens gleichgutem Wascheffekt erreicht. Durch die unabhängig von der Antriebswelle mit den Rührknüppeln antreibbaren Austrageinrichtungen kann der Füllungsgrad des Troges und damit auch die Verweilzeit der in dem Trog befindlichen Rüben beeinflußt werden. Es kann beispielsweise je nach Verschmutzungsgrad der Feldfrüchte eine Erhöhung der Antriebsgeschwindigkeit der Antriebswelle mit den Rührknüppeln erfolgen, ohne daß dies einen Einfluß auf den Austrag der Feldfrüchte aus dem Trog hat. Durch den getrennten Antrieb der Rührknüppel sowie der Austrageinrichtung wird es möglich, den Füllungsgrad bei gleichbleibender Zufuhr der Feldfrüchte zu dem Waschtrog zu verändern und auch die Verweilzeiten der Feldfrüchte in dem Waschtrog entsprechend dem Verschmutzungsgrad und der Wascheffektivität einzustellen.

Weitere zweckmäßige Ausgestaltungen der Waschvorrichtung gemäß der Erfindung sind in den Ansprüchen 2 bis 4 angegeben.

Bei der Waschvorrichtung nach der Erfindung kann der Trog in gleicher Weise wie beim bekannten Stand der Technik in seiner äußeren Form gestaltet sein und einen oberhalb des Trogbodens vorgesehenen Siebboden aufweisen, durch den die Schmutzstoffe hindurch in den Bodenbereich absinken und von dort über bodenseitige Schlammabläße abgezogen werden.

Die Zeichnung gibt Ausführungsbeispiele der Erfindung in schematischer Darstellung wieder.

Es zeigen:

Fig. 1     eine Draufsicht auf eine Waschvorrichtung,

Fig. 2     ein Schnittbild entlang der Schnittlinie II - II durch die Anordnung nach Fig. 1 mit teils weggebrochener Stirnwand des Waschtroges,

Fig. 3     ein Schnittbild entlang der Schnittlinie III - III in Fig. 1,

Fig. 4     eine Teilansicht in Richtung des Pfeiles A der Anordnung nach Fig. 3, jedoch ohne die dem Betrachter zugekehrte Seitenwand der Anordnung und des Troges,

Fig. 5     eine der Fig. 3 entsprechende Ansicht einer anderen Ausführungsvariante,

Fig. 6     eine Teildraufsicht auf die Anordnung nach Fig. 5.

Die in den Figuren wiedergegebenen Waschvorrichtungen weisen einen insgesamt mit 1 bezeichneten Waschtrog auf, welcher in der Regel selbsttragend ausgebildet ist oder aber in einem Stützgerüst gehalten wird.

Die Seitenwandungen des Waschtroges verlaufen in dem oberen Teil des Troges parallel zueinander. An diese parallelen Seitenwände 2 schließen sich trichterförmig konvergierende Wände 2a an, die in dem Boden 3 des Troges 1 enden.

In den Stirnwänden 4 und 5 des Troges ist in allen Ausführungsbeispielen eine rotierend antreibbare Welle 6 gelagert, an der Rührknüppel 7 befestigt sind, die sich in radialer Richtung von der Welle ausgehend erstrecken.

Zwischen dem Trogboden 3 und der Welle 6 ist ein Siebboden 8 vorgesehen, welcher eine Schalenform aufweist und in einem radialen Abstand von der Welle 6 angeordnet ist, der etwas größer ist als die Länge der Rührknüppel 7.

An dem einen Ende des Waschtroges 1 ist eine Einrichtung zur Zuführung der Zuckerrüben in Form einer seitlichen Schurre 9 vorgesehen. Die dem Trog 1 zugeführten Rüben werden in Troglängsrichtung von der Schurre 9 in Richtung zu der Stirnwand 4 befördert und dort in noch näher zu beschreibender Weise aus dem Trog ausgetragen.

Der Waschtrog ist ferner mit einem in der Zeichnung nicht wiedergegebenen Zu- und Ablauf für das Waschwasser verbunden. Dabei erfolgt die Führung des Waschwassers in der Regel im Gegenstrom zu der beschriebenen Bewegung der Zuckerrüben innerhalb des Troges.

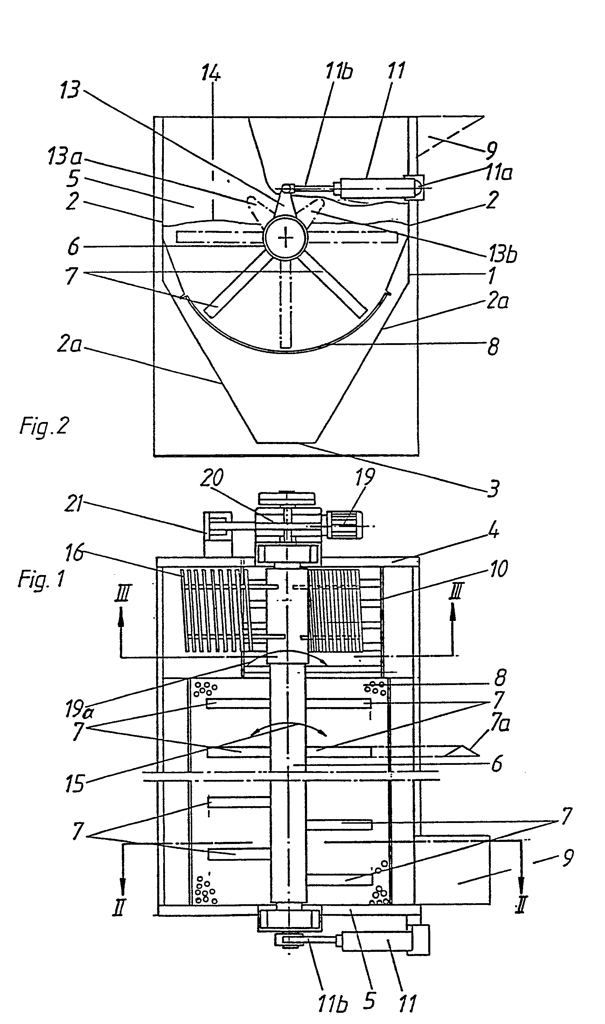

Der in den Fig. 1 bis 4 dargestellte Waschtrog ist im Bereich unterhalb der Rübenaustragvorrichtung auch noch mit einem Steinefänger 10 ausgerüstet, welcher die Form eines geneigten Rostes aufweist und sich, in Längsrichtung des Troges 1 gesehen, an den Siebboden 8 anschließt.

Aus den Fig. 1 und 2 ist erkennbar, daß die Welle 7 mit einem Antrieb 11 in Form einer Kolbenzylinderanordnung verbunden ist, welche mit ihrem Ende 11a an der Seitenwandung des Troges verschwenkbar gelagert ist. Die Kolbenstange 11b greift in dem dargestellten Beispiel an einem mit der Welle 6 fest verbundenen Schwenkarm 13 an, um die Welle 6 um ihre Längsachse in eine wechselnde, d.h. hin- und hergehende Drehbewegung zu versetzen. In dem dargestellten Beispiel ist angenommen, daß die Welle zwischen den beiden durch strichpunktierte Linien angedeuteten Endstellungen 13a und 13b des Schwenkarmes 13 etwa um 1/4 Umdrehung verschwenkt wird.

Die an der Welle 6 angeordneten Rührknüppel 7 sind in dem dargestellten Beispiel an der Welle 6 nur etwa über 1/4 des Wellenumfanges verteilt und so angeordnet, daß sie in jeder Stellung der Welle zum Trogboden 3 oder zu den lotrecht verlaufenden Seitenwänden 2 des Troges bzw. den geneigten Trogwänden 2a weisen. In dem dargestellten Beispiel der Fig. 2 sind strichpunktiert die beiden Endstellungen der Rührknüppel 7 ebenfalls wiedergegeben.

Durch die beschriebene Anordnung wird während des Betriebes der Waschvorrichtung, d. h. während des Antriebes der Welle in den genannten wechselnden Drehrichtungen, ein Austritt der Rührknüppel 7 aus der Waschflüssigkeit vermieden, wenn die Waschflüssigkeit auch nur bis etwa zur Oberkante der Welle 6 reicht, wie dies in der Fig. 2 durch das dort angedeutete Niveau 14 der Waschflüssigkeit dargestellt ist.

Infolge der beschriebenen pendelnden Bewegung der Rührknüppel 7 erfolgt eine gleichmäßige Verteilung der in den Trog eingebrachten Rüben über den gesamten Trogquerschnitt sowie ein über den gesamten Trogquerschnitt gleichbleibender Wascheffekt. Hierdurch ist es möglich, mit einem gegenüber dem Bekannten höheren Füllungsgrad des Troges zu arbeiten. In Abhängigkeit von dem Grad der Verschmutzung kann die Zahl der Pendelbewegungen der Rührknüppel 7 durch den Antrieb 11 verändert werden, so daß die Bewegung der Rüben im Waschtrog entsprechend intensiver wird.

Auch wenn bei Pendelbewegungen der Rührknüppel 7 über einen größeren Schwenkwinkel und bis zu einer Stellung der Rührknüppel 7 über das Wasserniveau 14 hinaus erfolgen sollte, sind keine Beschädigungen der Rüben durch die Rührknüppel 7 zu befürchten, weil durch die Umkehr der Bewegung der Rührknüppel 7 diese zunächst in die Ruhelage und von dort mit allmählich zunehmender Geschwindigkeit wieder in die Pendelbewegung versetzt werden.

Die beim Waschvorgang von den Rüben gelösten Schmutzteile gelangen, soweit sie ein höheres spezifisches Gewicht als das Waschwasser haben, durch den Siebboden 8 in den Bereich des Bodens 3 des Waschtroges 1 und werden von dort über in der Zeichnung nicht wiedergegebene Schlammablässe abgezogen.

In der Darstellung der Fig. 1 sind im oberen Teil dieser Figur jeweils zwei Rührknüppel 7 in beabstandeten Ebenen senkrecht zur Längsachse der Welle 6 angeordnet. Demgegenüber ist in dem unteren Teil der Fig. 1 eine Anordnung der Rührknüppel 7 wiedergegeben, bei denen diese in zueinander versetzt vorgesehenen Ebenen mit der Welle 6 verbunden sind.

Es können selbstverständlich statt jeweils zwei Rührknüppel 7 auch drei Rührknüppel 7 in jeweils beabstandeten Ebenen oder auch versetzt gegeneinander an der Welle 6 befestigt werden. Die Anordnung von zwei Rührknüppeln 7 in benachbarten Ebenen hat sich jedoch besonders bewährt.

In der Fig. 1 ist die pendelnde Bewegung der Rührknüppel 7 durch den Doppelpfeil 15 angedeutet.

Die Rührknüppel 7 benachbarter Ebenen können auch abweichend von den Darstellungen der Fig. 1 und 2 um die Längsachse der Welle 6 radial versetzt angeordnet sein. Diese radial versetzte Anordnung ist dann besonders zweckmäßig, wenn die Verschwenkung der Welle 6 um ihre Längsachse mehr als jeweils 1/4 Umdrehung beträgt.

Wie in der Fig. 1 durch eine seitlich herausgezogene Darstellung aufgezeigt ist, sind die Rührknüppel 7 in dem wiedergegebenen Beispiel in ihrem Querschnitt 7a dreieckförmig mit gerundeten Ecken ausgebildet und sind mit einer Dreieckskante in Förderrichtung der Rüben weisend an der Welle 6 gehalten. Hierdurch wird die Förderbewegung der Rüben von der Einlaufschurre 9 zu der Austrageinrichtung begünstigt.

In den wiedergegebenen Fig. 1 bis 4 ist die Austrageinrichtung in Form eines auf der antreibbaren Welle 6 unabhängig von dieser Welle rotierend antreibbaren Auswerfers ausgebildet.

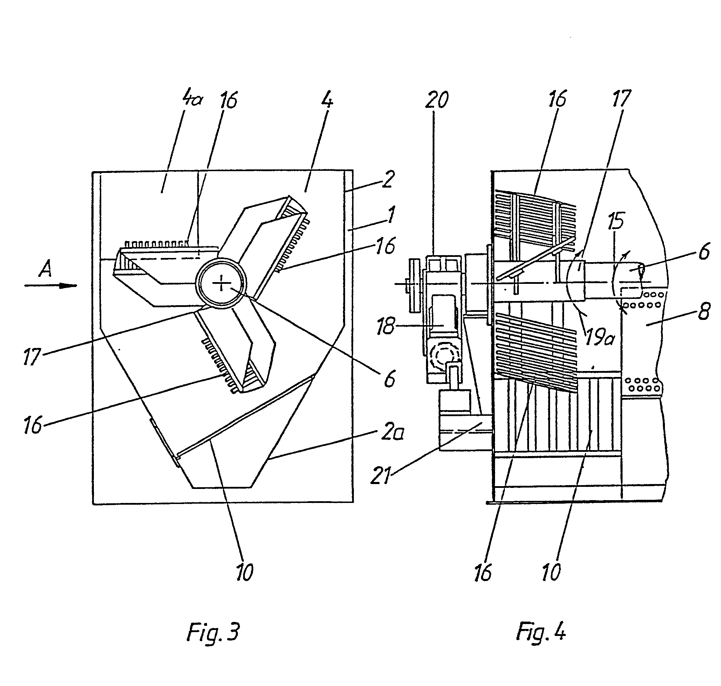

Dieser Auswerfer ist mit in Austragrichtung geneigt verlaufenden und auf dem Umfang verteilt in radialer Richtung weisenden Rosten 16 ausgerüstet, welche in dem dargestellten Beispiel um 120° versetzt an einer auf der Welle 6 drehbar gehaltenen Hülse 17 befestigt sind. An der Hülse 17 greift eine insgesamt mit 18 bezeichnete Antriebseinrichtung an und versetzt die Hülse 16 in eine durch den Pfeil 19a in den Fig. 1 und 4 angedeutete Drehrichtung. Der Antrieb 18 weist einen Antriebsmotor 19 (Fig. 1), ein Getriebe 20 und eine Drehmomentstütze 21 auf.

Die auf die Roste 16 gelangenden Rüben werden bei der Drehbewegung der Hülse 17 um die Welle 6 aus dem Waschwasser herausgehoben und durch ein Abgleiten auf den geneigten Rosten 16 durch einen Einschnitt 4a in der Stirnwand 4 des Troges 1 (Fig. 3) ausgetragen. Die ausgetragenen Rüben werden in nicht dargestellter Weise entweder dem nächsten Verarbeitungsvorgang oder aber einem Weiterförderer zugeführt.

Im Bereich der Austragvorrichtung befindet sich in dem dargestellten Beispiel auch unterhalb der rotierend umlaufenden Roste der Steinefänger 10, auf dem die mit den Rüben in den Trog 1 eingebrachten Steine getrennt von den Rüben ausgetragen werden. Die Steine gleiten auf dem Rost des Steinefängers 10 nach unten und können von dort in bekannter Weise, beispielsweise über eine Schleuse, ausgetragen werden.

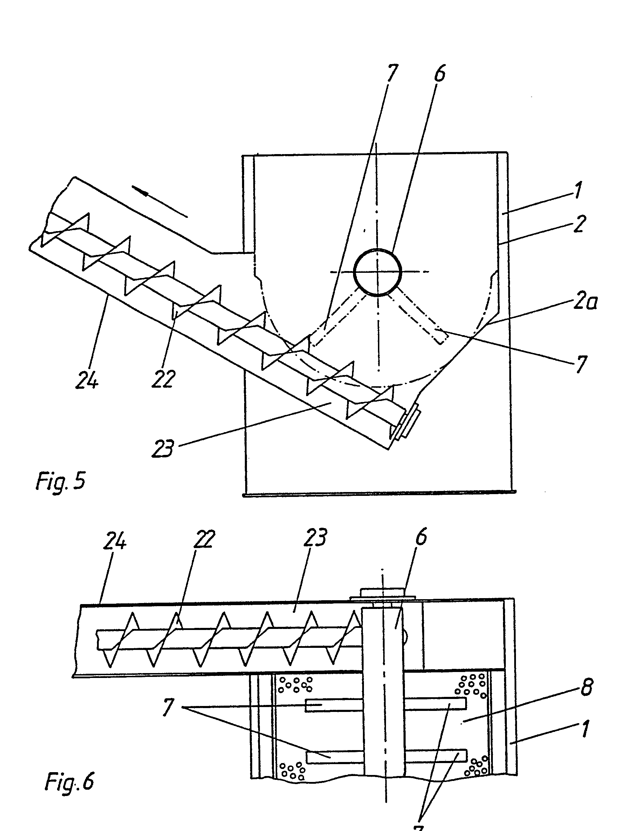

Statt der in den Fig. 1 bis 4 wiedergegebenen Austragvorrichtung mit den umlaufend angetriebenen Rosten 16 kann gemäß den Fig. 5 und 6 der Austrag der Rüben aus dem Waschtrog 1 auch mittels einer Förderschnecke 22 erfolgen. Zu diesem Zweck erstreckt sich die Förderschnecke 22 in einer geneigten Stellung bis etwa zur Mittellängsachse des Troges in Richtung zum Trogboden und ist innerhalb des Troges 1 in einer durch Formung der Trogwandungen sowie des Trogbodens gebildeten muldenförmigen Vertiefung 23 gehalten, die sich unmittelbar an das Bodensieb 8 anschließt. Diese muldenförmige Trogwandung 23 geht im Bereich außerhalb des Troges in ein die Schnecke 22 umschließendes Anschlußgehäuse 24 über. Im Falle der Anordnung nach den Fig. 5 und 6 mit einer Austragschnecke 22 für die gewaschenen Rüben ist im Bereich unterhalb der Austragschnecke 22 kein Steinefänger 10 vorgesehen. Dieser kann, falls erforderlich, im Bereich zwischen dem Eintrag der Rüben und dem Austrag auf der Länge des Troges 1 auch an anderer Stelle angeordnet werden.

## Patentansprüche

1. Waschvorrichtung für Zuckerrüben oder andere Feldfrüchte mit einem Waschtrog (1) und einer darin in Troglängsrichtung gehaltenen, rotierend antreibbaren Welle (6), an welcher sich radial erstreckende Rührknüppel (7) befestigt sind, sowie mit einem Zu- und Ablauf für das Waschwasser und Einrichtungen zum Zuführen und Austragen der Feldfrüchte, wobei die antreibbare Welle (6) während des Waschvorganges in wechselnder Drehrichtung um ihre Längsachse und in jeder Richtung jeweilig um 1/4 bis 1/3 einer vollen Umdrehung antreibbar ist und die Rührknüppel (7) an der Welle nur etwa über 1/4 bis 1/3 des Wellenumfanges verteilt sowie zum Trogboden (3) oder zu den Trogwänden (2; 2a) weisend angeordnet sind, *dadurch gekennzeichnet*, daß die Einrichtungen zum Zuführen und Austragen der Feldfrüchte an den einander gegenüberlliegenden Enden des Troges vorgesehen sind und zur Einstellung der Verweilzeit und des Füllungsgrades der in den Trog eingebrachten Feldfrüchte entweder

a) im Austragbereich des Troges (1) eine quer zur Troglängsachse verlaufende, geneigt angeordnete, von dem Antrieb der Welle (6) unabhängig antreibbare Austrag-Förderschnecke (22) vorgesehen ist, die sich etwa bis zur Mittellängsachse des Troges (1) und bis zum Trogboden (3) erstreckt und innerhalb des Troges (1) in einer durch Formung der Trogwände (2; 2a) sowie des Trogbodens (3) gebildeten muldenförmigen Vertiefung (23) sowie außerhalb des Troges (1) in einem die Förderschnecke (22) umschließenden Anschlußgehäuse (24) geführt ist, oder

b) im Austragbereich des Troges (1) auf der antreibbaren Welle (6) ein unabhängig von der Welle (6) rotierend antreibbarer Auswerfer mit in Austragrichtung geneigt verlaufenden und auf dem Umfang verteilt in radialer Richtung weisenden mitbewegten Rosten (16) gehalten ist.

2. Vorrichtung nach Anspruch 1, *dadurch gekennzeichnet*, daß als Antrieb für die Welle (6) eine Kolbenzylinderanordnung (11) vorgesehen ist, die an einem mit der Welle (6) verbundenen, in radialer Richtung weisenden Schwenkarm (13) angreift.

3. Vorrichtung nach einem der Ansprüche 1 oder 2, *dadurch gekennzeichnet*, daß die Rührknüppel (7) in beabstandeten Ebenen senkrecht zur Längsachse der antreibbaren Welle (6) und in benachbarten Ebenen um die Längsachse der Welle (6) radial versetzt angeordnet sind.

4. Vorrichtung nach einem der Ansprüche 1 bis 3, *dadurch gekennzeichnet*, daß die Rührknüppel (7) im Querschnitt dreieckförmig mit gerundeten Ecken ausgebildet und mit einer Dreieckskante in Förderrichtung der Feldfrüchte weisend an der Welle (6) gehalten sind.

## Claims

1. A washing apparatus for sugar beets or other agricultural products, having a washing trough (1) and a shaft (6) which is held therein in the longitudinal direction of the trough and is drivable in a rotating manner and to which are secured radially extending agitator bars (7), and having an inlet and outlet for the washing water and devices for the supply and discharge of the agricultural products, the drivable shaft (6) being drivable during the washing procedure in alternating directions of rotation about its longitudinal axis and in each direction by 1/4 to 1/3 of a complete revolution in each case and the agitator bars (7) on the shaft being distributed only over approximately 1/4 to 1/3 of the periphery of the shaft and being arranged pointing towards the bottom (3) of the trough or towards the walls (2; 2a) of the trough, characterized in that the devices for supplying and discharging the agricultural products are provided at the mutually opposite ends of the trough and in order to set the dwell period and the degree of filling of the agricultural products introduced into the trough either

a) in the discharge area of the trough (1) a discharge conveyor worm (22), which extends transversely to the longitudinal axis of the trough and is arranged inclined and is drivable independently of the drive of the shaft (6) and which extends approximately as far as the median longitudinal axis of the trough (1) and as far as the base (3) of the trough and is guided inside the trough (1) in a depression-shaped recess (23) formed by shaping the walls (2; 2a) of the trough and the base (3) of the trough and outside the trough (1) in a connecting housing (24) surrounding the conveyor worm (22), or

b) in the discharge area of the trough (1) an ejector drivable in a rotating manner independently of the drivable shaft (6) is held on the shaft (6) by jointly moved grills (16) which extend inclined in the discharge direction and which, distributed on the periphery, point in a radial direction.

2. An apparatus according to Claim 1, characterized in that a piston-cylinder arrangement (11), which engages on a pivot arm (13) connected to the shaft (6) and pointing in a radial direction, is provided as the drive for the shaft (6).

3. An apparatus according to one of Claims 1 or 2, characterized in that the agitator bars (7) are arranged in planes spaced apart at right angles to the longitudinal axis of the drivable shaft (6) and radially offset in adjacent planes about the longitudinal axis of the shaft (6).

4. An apparatus according to any one of Claims 1 to 3, characterized in that the agitator bars (7) are made triangular with rounded corners in cross-section and are held pointing in the conveying direction of the agricultural products on the shaft (6) by a triangular edge.

**Revendications**

1. Dispositif de lavage pour betteraves sucrières ou autres produits agricoles, comportant une cuve de lavage (1) et un arbre (6) entraîné en rotation, qui y est maintenu dans la direction longitudinale de la cuve, sur lequel sont fixés des agitateurs (7) dirigés radialement, ainsi qu'une amenée et évacuation pour l'eau de lavage et des agencements pour amener et évacuer les produits de récolte, l'arbre entraînable (6) pouvant être entraîné, pendant le processus de lavage, dans un sens de rotation alternatif, autour de son axe longitudinal et dans chaque sens chaque fois de 1/4 à 1/3 de tour complet, et les agitateurs (7) fixés à l'arbre étant répartis seulement sur 1/4 à 1/3 de la périphérie de l'arbre et étant disposés de façon être dirigés vers le fond (3) ou les parois (2. 2a) de la cuve, caractérisé en ce que les dispositifs pour amener et évacuer les produits de récolte sont prévus aux extrémités mutuellement opposées de la cuve et en ce que pour régler la durée de séjour et le degré de remplissage des produits de récolte introduits dans la cuve soit:

a) on prévoit dans la zone d'évacuation de la cuve (1) une hélice transporteuse d'évacuation (22) s'etendant transversalement à l'axe longitudinal de la cuve, disposée en position inclinée, pouvant être entraînée indépendamment de l'etraînement de l'arbre (6), qui s'étend peu près jusqu'à l'axe longitudinal central de la cuve (1) et jusqu'au fond (3) de la cuve et est guidée l'intérieur de la cuve (1) dans un creux en forme d'auge (23) formé par conformation des parois (2. 2a) de la cuve, ainsi que du fond (3) de la cuve, ainsi qu'à l'extérieur de la cuve (1), dans un carter de raccordement (24) entourant l'hélice transporteuse (22), soit

b) dans la zone d'évacuation de la cuve (1), sur l'arbre entraîné (6), un éjecteur pouvant être entraîné en rotation indépendamment de l'arbre (6) et retenu avec des grilles (16) inclinées dans la direction d'évacuation et entraînées en rotation, dirigées en direction radiale en étant réparties sur la périphérie.

2. Dispositif selon la revendication 1, caractérisé en ce qu'on prévoit, comme ensemble d'entraînement de l'arbre (6), un ensemble piston-cylindre (11) qui est appliqué à un bras de pivotement (13) dirigé radialement, relié à l'arbre (6).

3. Dispositif selon la revendication 1 ou 2, caractérisé en ce que les agitateurs (7) sont disposés dans des plans séparés orthogonalement à l'axe longitudinal de l'arbre entraîné (6) et dans des plans voisins avec décalage radial autour de l'axe longitudinal de l'arbre (6).

4. Dispositif selon l'une des revendications 1 à 3, caractérisé en ce que les agitateurs (7) ont une conformation de section droite triangulaire avec des sommets arrondis et sont fixés à l'arbre (6) par un côté du triangle en étant dirigés dans le sens de transport des produits de récolte.

Fig.2

Fig. 1

Fig. 3

Fig. 4

Fig. 5

Fig. 6